# FASCICULE DE BREVET EUROPEEN

(11) **EP 0 692 185 B1**
(45) Date de publication et mention de la délivrance du brevet: **10.01.2001**
(21) Numéro de dépôt: 95440041.2
(22) Date de dépôt: 04.07.1995
(51) Int. Cl.: A01D 78/12, A01D 78/10

(54) **Machine de fenaison, notamment une andaineuse à bras porte-fourches commandés**
Heuwerbungsmaschine, namentlich ein Schwader mit gesteuerten Zinkentragarmen
Haymaking machine, especially a swather with controlled fork-carrying arms

(30) Priorité: 13.07.1994 FR 9408882
(43) Date de publication de la demande: 17.01.1996
(73) Titulaire: KUHN S.A., 67700 Saverne (FR)
(72) Inventeur: Aron, Jérôme, F-67330 Dossenheim Sur Zinsel (FR)
(74) Mandataire: Andres, Jean-Claude

(56) Documents cités:
- CH-A- 474 207
- CH-A- 490 786
- DE-A- 1 457 953
- DE-A- 2 150 555
- FR-A- 1 589 179
- GB-A- 1 220 337

## Description

La présente invention se rapporte à une machine de fenaison, notamment une andaineuse de végétaux, comportant un bâti qui peut être accroché à un tracteur et qui est muni de roues porteuses, lequel bâti supporte un rotor d'andainage comprenant un anneau qui porte plusieurs bras munis de fourches de travail, cet anneau étant porté par des galets et pouvant être entraîné en rotation autour d'un axe géométrique vertical ou légèrement incliné par rapport à la verticale.

La machine décrite dans la demande de brevet FR 1 589 179 comporte un rotor avec un axe support portant une came profilée qui commande les bras porte-outils. Cet axe et cette came se situent au centre du rotor. Par ailleurs, les bras porte-outils s'étendent à partir du centre et sont entourés, à leurs extrémités éloignées du centre, par un cerceau. Ce cerceau n'est cependant pas tenu par des galets solidaires du bâti et il n'assure pas l'entraînement en rotation du rotor.

Sur une autre machine connue dans le brevet GB 1 220 337, les bras porte-fourches du rotor sont articulés sur un anneau au moyen d'axes horizontaux et sensiblement perpendiculaires à la direction longitudinale desdits bras. A chacun de ces bras est associé un ressort hélicoïdal qui le maintient de telle sorte que ses fourches suivent le sol.

Sur un tel rotor, les fourches projettent le fourrage à une vitesse relativement importante. A l'andainage, cette projection provoque des pertes par effeuillage et par brisures.

En sus, pour obtenir un andain bien formé, il est prévu d'utiliser un deuxième rotor qui est disposé dans la zone de projection du premier rotor. Ce deuxième rotor possède un diamètre qui est moins important. Il comporte des dents superposées se trouvant à une certaine distance du sol. Lors de la formation d'un andain, ce deuxième rotor tourne dans le sens inverse du premier. Les végétaux sont alors projetés vers l'arrière, entre les deux rotors, pour former un andain.

Ce deuxième rotor rend la machine plus compliquée. Il augmente son poids et son prix.

La présente invention a pour but de proposer une andaineuse simple, avec un rotor de grand diamètre et qui n'a pas les inconvénients précités.

A cet effet, une importante caractéristique de l'invention consiste en ce que le bâti se compose d'un cadre de forme sensiblement triangulaire et d'un support équipé de roues porteuses, lequel support est articulé sur le cadre au moyen d'un axe sensiblement perpendiculaire au sens d'avancement et est déplaçable en hauteur par rapport au cadre à l'aide d'un vérin hydraulique et que l'anneau porte sur sa périphérie des supports avec des paliers dans lesquels s'étendent des bras porte-fourches qui sont dirigés vers l'extérieur et qui peuvent pivoter autour de leurs axes longitudinaux respectifs, ledit anneau étant entraîné en rotation au moyen d'un organe de commande constitué par une courroie ou une chaîne qui se situe à l'extérieur dudit anneau.

Cet agencement permet d'avoir un rotor avec une importante largeur de travail grâce à un anneau de grand diamètre qui porte des bras porte-outils pouvant être relativement courts.

Par ailleurs, la partie centrale de l'anneau est dégagée du fait qu'il n'y a pas de came de commande ni de bras porte-outils et de moyens d'entraînement à cet endroit. Cela permet le passage de pièces du bâti support et de moyens destinés au réglage de la distance par rapport au sol des fourches de travail.

D'autres caractéristiques et avantages de l'invention ressortiront de la description ci-après d'exemples de réalisation non limitatifs de l'invention, avec référence aux dessins annexés dans lesquels :
- La figure 1 représente une vue de dessus d'une machine selon l'invention.
- La figure 2 représente une vue de côté, avec une coupe partielle, de la machine selon l'invention.
- La figure 3 représente une vue de détail d'un bras porte-fourches en position de râtelage.
- La figure 4 représente une vue de détail d'un bras avec les fourches relevées.
- La figure 5 représente une coupe suivant le plan V-V de la figure 4.
- La figure 6 représente une vue de dessus d'une machine selon un autre exemple de réalisation.

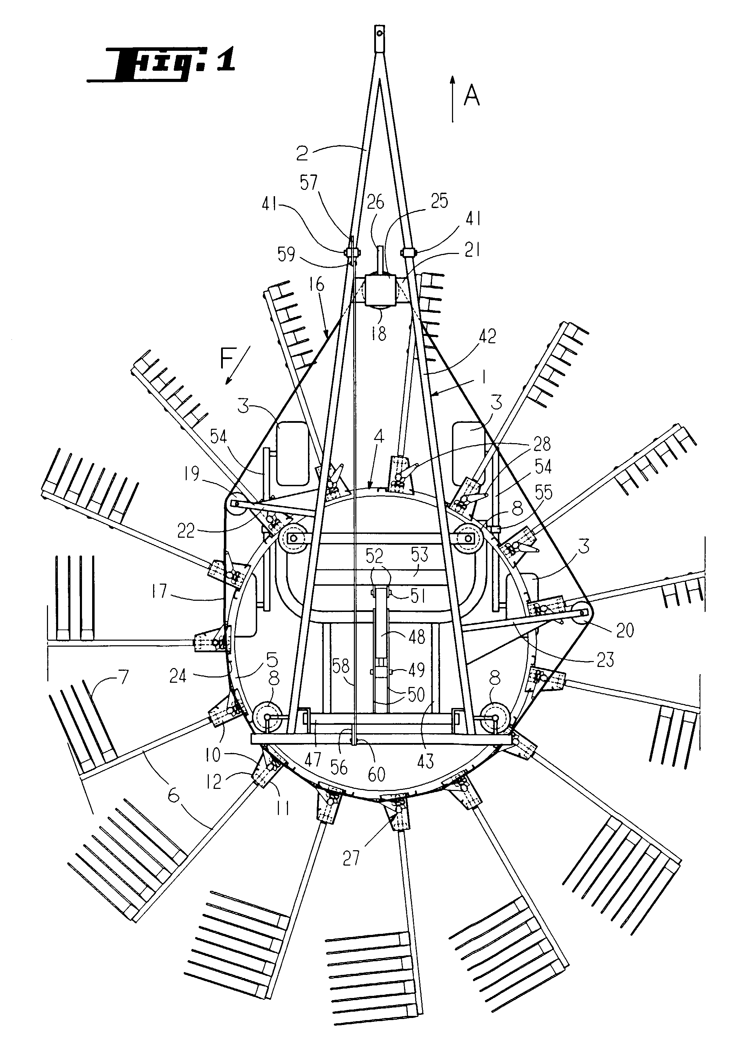

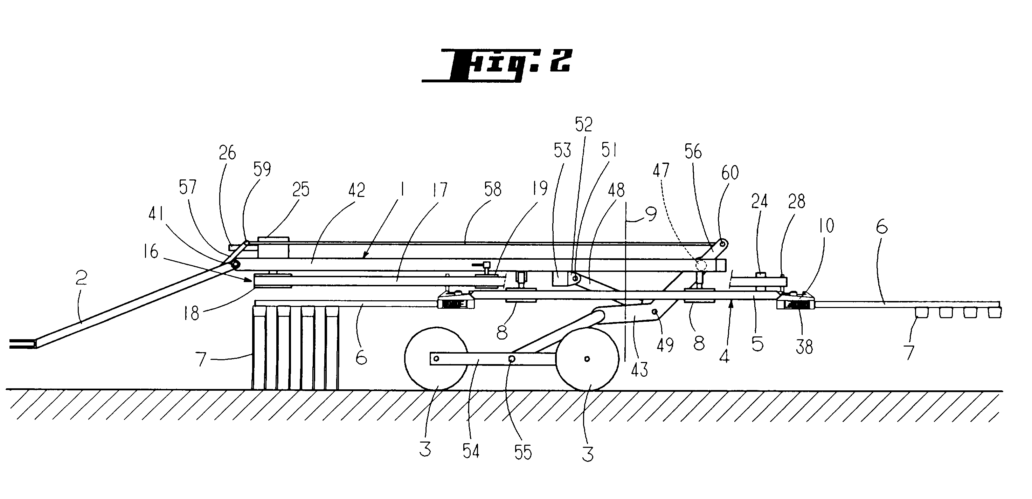

Telle qu'elle est représentée sur les figures 1 et 2, l'andaineuse selon l'invention comporte un bâti (1) qui peut être accroché à un tracteur non représenté au moyen d'un timon (2). Celui-ci est articulé à l'extrémité avant du bâti (1) au moyen d'axes (41) sensiblement perpendiculaires au sens d'avancement (A). Ledit bâti se compose d'un cadre (42) de forme sensiblement triangulaire et d'un support (43) qui est équipé de roues porteuses (3) qui roulent sur le sol.

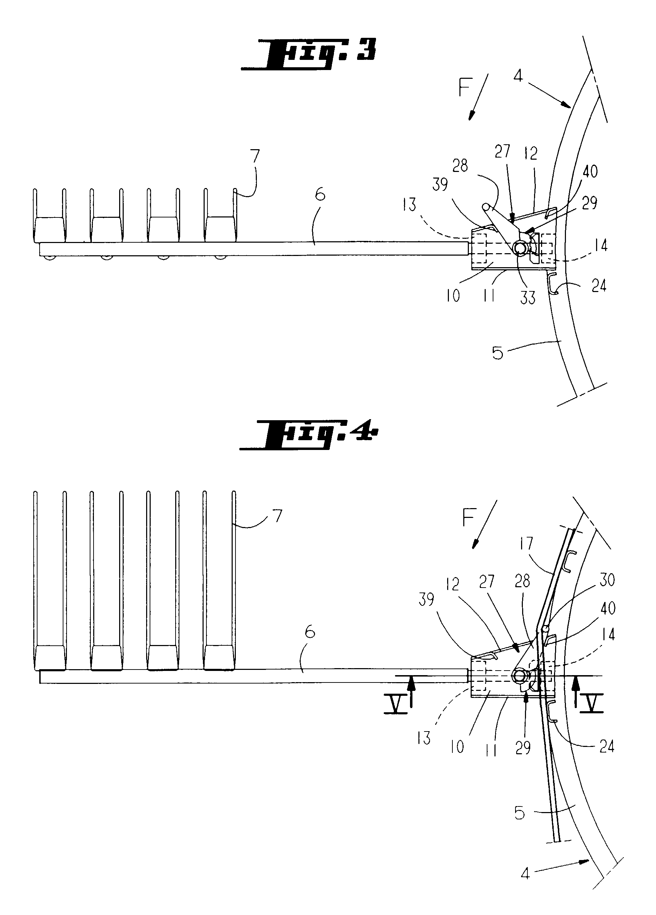

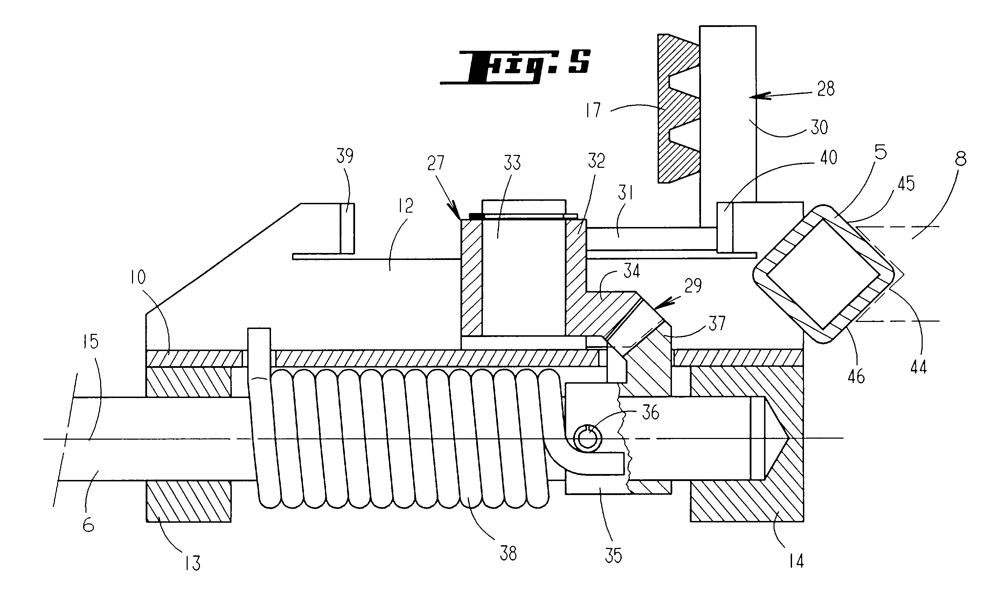

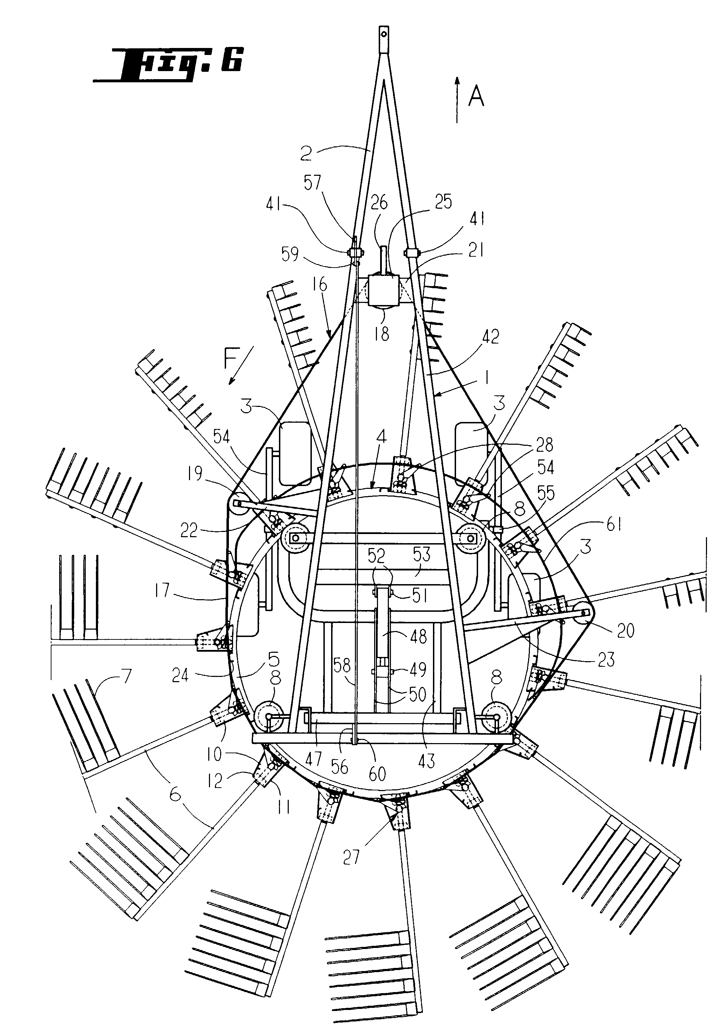

Le cadre (42) du bâti (1) supporte un rotor d'andainage (4) se composant notamment d'un anneau (5) sur lequel sont montés des bras (6) dirigés vers l'extérieur. Chacun de ces bras (6) porte des fourches de travail (7) à son extrémité extérieure. Le cadre (42) porte quatre galets (8) qui sont disposés dans un plan sensiblement horizontal pour le guidage de l'anneau (5). Chacun de ces galets (8) présente une gorge (44) en V sur sa périphérie. L'anneau (5) possède une section carrée. Il est guidé dans les gorges (44) au moyen de ses faces intérieures (45 et 46) (voir figure 5). Ledit anneau (5) peut tourner sur ces galets (8) autour d'un axe géométrique (9) situé en son centre. Cet axe géométrique (9) est vertical ou légèrement incliné par rapport à la verticale.

L'anneau (5) porte à intervalles sensiblement réguliers sur sa périphérie des supports (10) pour les bras porte-fourches (6). Ces supports (10) sont constitués par des plaques avec deux bords (11 et 12) dirigés vers le haut. Elles sont soudées sur l'anneau (5) et portent deux paliers (13 et 14) dans lesquels s'étendent les bras (6). Entre ces bras (6) et lesdits paliers (13 et 14) il est prévu un léger jeu, de sorte qu'ils puissent pivoter autour de leurs axes longitudinaux respectifs (15).

Le cadre (42) du bâti (1) supporte par ailleurs un organe de commande (16) des bras porte-fourches (6) qui les fait pivoter autour des axes longitudinaux (15) lors de la rotation de l'anneau (5). Cet organe de commande (16) se situe au moins en partie à proximité dudit anneau (5), de telle sorte que le milieu du rotor (4) soit libre. Il se situe avantageusement totalement à l'extérieur de l'anneau (5). Dans l'exemple représenté, cet organe de commande (16) est constitué par une courroie (17). Il pourrait aussi être constitué par une chaîne ou une autre pièce analogue. Cette courroie (17) est guidée au moyen de trois poulies (18, 19 et 20) qui sont montées sur des supports (21, 22 et 23) solidaires du bâti (1). Elle passe en sus sur des pattes (24) sensiblement verticales qui sont solidaires de l'anneau (5). La poulie (18) se situe à l'avant de l'anneau (5), près de l'extrémité la plus avancée du bâti (1). Elle est montée sur un arbre moteur qui peut être entraîné en rotation par exemple à partir de l'arbre de prise de force du tracteur. A cet effet, cet arbre moteur est lié à un couple conique situé dans un carter (25) avec un second arbre (26) qui peut être relié à l'arbre de prise de force par un arbre de transmission intermédiaire. Les deux poulies (19 et 20) se situent l'une sur le côté gauche et l'autre sur le côté droit du cadre (42). Leurs supports (22 et 23) peuvent être déplacés le long de ce cadre (42) et être fixés en différents endroits.

La courroie (17) passe sur les pattes (24) de l'anneau (5) sur la partie arrière de celui-ci. Grâce au contact avec un grand nombre de ces pattes (24), elle entraîne l'anneau (5) en rotation autour de l'axe géométrique (9) lorsqu'elle est elle-même entraînée par la poulie (18).

Entre la courroie (17) et chaque bras porte-fourches (6) sont disposés des moyens (27) qui actionnent lesdits bras (6). Ces moyens (27) sont constitués par une manivelle (28) et un mécanisme de renvoi (29) (voir figure 5). Chaque manivelle (28) se compose d'un levier (30) sensiblement vertical qui se situe au niveau de la courroie (17), d'un bras sensiblement horizontal (31) et d'une douille (32). Cette dernière est montée pivotante sur un axe (33) sensiblement vertical qui est solidaire du support (10) correspondant. La douille (32) comporte un secteur denté (34) qui est orienté vers le bas et qui s'étend sur environ un tiers de sa périphérie. Sur chaque bras porte-fourches (6) est fixée une bague (35) au moyen d'une goupille (36). Cette bague (35) comporte un secteur denté (37) qui est dirigé vers le haut et qui s'étend sur environ un tiers de sa périphérie. Ce secteur (37) engrène avec le secteur (34) précité avec lequel il forme un angle d'environ 90°. Sur chaque bras porte-fourches (6) est en sus monté un ressort à action angulaire (38). Celui-ci s'appuie d'une part sur la goupille (36) et d'autre part sur le support (10). Il exerce ainsi une pression sur le bras porte-fourches (6) qui tend à le faire pivoter autour de son axe longitudinal (15), de sorte qu'il occupe la position de râtelage représentée sur la figure 3. Le support (10) comporte sur son bord (12) qui est dirigé vers le haut deux butées (39 et 40) qui limitent les déplacements de la manivelle (28). Sur la partie avant (vu dans le sens d'avancement (A)) de l'anneau (5) les manivelles (28) sont plaquées contre les premières butées (39) par les ressorts (38). Ceux-ci agissent sur les bras (6) et, à travers les deux secteurs dentés (37 et 34), sur lesdites manivelles (28). Dans cette position, les fourches (7) des bras (6) sont sensiblement verticales. Sur la partie arrière de l'anneau (5) la courroie (17) est en contact avec les leviers (30) des manivelles (28). Elle déplace ces dernières autour de leurs axes de pivotement (33) et les plaque contre les secondes butées (40). Les secteurs dentés (34 et 37) tournent alors les bras porte-fourches (6) d'environ 90° à l'encontre des ressorts (38), de sorte que les fourches (7) soient sensiblement horizontales.

Le support (43) du bâti (1) passe à l'intérieur de l'anneau (5). Il est articulé sur le cadre (42) au moyen d'un axe (47) sensiblement perpendiculaire au sens d'avancement (A). Un vérin hydraulique (48) est articulé au moyen d'un axe (49) sur des longerons (50) du support (43) et au moyen d'un axe (51) sur des plats (52) qui sont solidaires d'une traverse (53) du cadre (42). Ce vérin hydraulique (48) permet de déplacer le cadre (42) par rapport au support (43), autour de l'axe d'articulation (47). Ce déplacement provoque une variation de la distance par rapport au sol du cadre (42) et du rotor (4).

Les roues (3) du support (43) sont montées par deux sur des balanciers (54). Ceux-ci sont articulés sur le support (43) au moyen d'axes (55) sensiblement perpendiculaires au sens d'avancement (A).

Le support (43) comporte par ailleurs un levier (56) qui s'étend vers le haut au-delà de son axe d'articulation (47) avec le cadre (42). Le timon (2) comporte, près de son extrémité qui est liée au cadre (42), un levier (57) qui s'étend vers le haut au-delà de l'axe d'articulation (41) avec ledit cadre (42). Ces deux leviers (56 et 57) sont sensiblement parallèles entre eux et ont sensiblement la même longueur. Une tringle (58) qui est sensiblement parallèle au cadre (42) relie les deux leviers (56 et 57). Cette tringle (58) est articulée sur le levier (57) du timon (2) au moyen d'un axe (59) et sur le levier (56) du support (43) au moyen d'un second axe (60). Ces deux axes (59 et 60) sont sensiblement perpendiculaires au sens d'avancement (A) et sensiblement parallèles aux axes d'articulation (41 et 47) du timon (2) et du support (43) sur le cadre (42). La tringle (58), le cadre (42) et les deux leviers (56 et 57) forment ainsi sensiblement un parallélogramme déformable. L'exemple de réalisation selon la figure 6 diffère de l'exemple précité en ce que le cadre (42) porte un rail (61) pour le guidage des manivelles (28) sur la partie avant de l'anneau (5). Ce rail (61) est sensiblement parallèle audit anneau (5). Il s'étend à une distance telle de cet anneau (5) qu'il maintient les manivelles (28) en contact avec les premières butées (39). Ce rail (61) permet de supprimer les ressorts (38) et assure une plus grande stabilité des bras (6) et des fourches (7) dans la position de râtelage.

Pour le travail d'andainage, le cadre (42) et le rotor (4) des machines selon les deux exemples décrits ci-dessus sont abaissés au moyen du vérin hydraulique (48) jusqu'à ce que les fourches (7) qui sont dirigées vers le bas touchent le sol. Grâce à l'agencement en forme de parallélogramme du cadre (42) de la tringle (58) et des leviers (56 et 57), ledit cadre (42) et le rotor (4) restent pratiquement parallèles au sol durant leurs déplacements en hauteur. De plus, la chape d'accrochage du timon (2) demeure sensiblement au même niveau. La machine est alors tirée dans la direction d'avancement (A) au moyen du tracteur. La courroie (17) est entraînée dans le sens de la flèche (F) par la poulie (18). Elle entraîne à son tour l'anneau (5) avec les bras porte-fourches (6) dans le même sens. Celui-ci tourne alors sur les galets (8) autour de l'axe géométrique (9). Durant cette rotation, les bras porte-fourches (6) qui se situent sur la partie avant de l'anneau (5) ratissent les végétaux qui se trouvent au sol. Lorsqu'ils arrivent dans la partie latérale de l'anneau (5), leurs manivelles (28) entrent en contact avec la courroie (17). Celle-ci déplace ces manivelles (28) autour de leurs axes (33) jusqu'à ce qu'elles rencontrent les secondes butées (40). Lors de ces déplacements, les secteurs dentés (34 et 37) font pivoter les bras porte-fourches (6) autour de leurs axes longitudinaux (15). Dans l'exemple selon les figures 1 à 5 ces pivotements s'effectuent à l'encontre de la force des ressorts (38). Les fourches (7) sont alors relevées à l'horizontale, de telle sorte qu'elles déposent les végétaux ratissés sous la forme d'un andain (figure 4). Ces fourches (7) restent dans la position relevée sur toute la partie arrière de l'anneau (5). Ensuite, la courroie (17) est guidée par la poulie (20) de sorte qu'elle s'éloigne de l'anneau (5) et libère les manivelles (28). Simultanément, les ressorts (38) font pivoter les bras (6) autour de leurs axes longitudinaux (15). Lesdits bras (6) entraînent les manivelles (28) correspondantes par l'intermédiaire des secteurs dentés (37 et 34) jusqu'à ce qu'elles rencontrent les premières butées (39). Dans cette position, les fourches (7) se situent à nouveau dans la position de ratissage (figure 3). Dans l'exemple selon la figure 6, c'est le rail (61) qui fait pivoter les manivelles (28) de telle sorte qu'elles fassent pivoter les bras (6) et les fourches (7) dans la position de ratissage.

Pour remettre la machine dans la position de transport, l'utilisateur arrête la rotation du rotor (4). Ensuite il actionne le vérin hydraulique (48) de sorte qu'il soulève le cadre (42) avec le rotor (4) et éloigne les fourches (7) du sol. Les bras porte-fourches (6) peuvent alors être partiellement démontés afin de réduire la largeur de la machine.

Il est bien évident que l'invention n'est pas limitée aux modes de réalisation décrits et représentés sur les dessins annexés. Des modifications sont possibles, notamment en ce qui concerne la constitution des divers éléments ou par substitution d'équivalents techniques, sans pour autant sortir du domaine de protection, tel que défini dans les revendications.

## Revendications

1. Machine de fenaison, notamment une andaineuse de végétaux, comportant un bâti (1) qui peut être accroché à un tracteur et qui est muni de roues porteuses (3), lequel bâti (1) supporte un rotor d'andainage (4) comprenant un anneau (5) qui porte plusieurs bras (6) munis de fourches de travail (7), cet anneau (5) étant porté par des galets (8) et pouvant être entraîné en rotation autour d'un axe géométrique (9) vertical ou légèrement incliné par rapport à la verticale, caractérisée par le fait que le bâti (1) se compose d'un cadre (42) de forme sensiblement triangulaire et d'un support (43) équipé de roues porteuses (3), lequel support (43) est articulé sur le cadre (42) au moyen d'un axe (47) sensiblement perpendiculaire au sens d'avancement (A) et est déplaçable en hauteur par rapport au cadre (42) à l'aide d'un vérin hydraulique (48) et par le fait que l'anneau (5) porte sur sa périphérie des supports (10) avec des paliers (13 et 14) dans lesquels s'étendent des bras porte-fourches (6) qui sont dirigés vers l'extérieur et qui peuvent pivoter autour de leurs axes longitudinaux respectifs (15), ledit anneau (5) étant entraîné en rotation au moyen d'un organe de commande (16) constitué par une courroie (17) ou une chaîne qui se situe à l'extérieur dudit anneau (5).

2. Machine selon la revendication 1, caractérisée par le fait que chaque galet (8) présente une gorge (44) en V sur sa périphérie.

3. Machine selon la revendication 2, caractérisée par le fait que l'anneau (5) possède une section carrée et qu'il est guidé dans les gorges (44) des galets (8) au moyen de ses faces intérieures (45 et 46).

4. Machine selon la revendication 1, caractérisée par le fait que le vérin hydraulique (48) est articulé sur des longerons (50) du support (43) et sur une traverse (53) du cadre (42).

5. Machine selon la revendication 1, caractérisée par le fait qu'un timon (2) est articulé à l'extrémité avant du bâti (1) au moyen d'axes (41) sensiblement perpendiculaires au sens d'avancement (A).

6. Machine selon la revendication 5, caractérisée par le fait que le support (43) du bâti (1) comporte un levier (56) et que le timon (2) comporte un levier (57), une tringle (58) étant articulée sur le levier (57) du timon (2) au moyen d'un axe (59) et sur le levier (56) du support (43) au moyen d'un second axe (60).

7. Machine selon la revendication 6, caractérisée par le fait que la tringle (58), le cadre (42) du bâti (1) et les deux leviers (56 et 57) forment, vu de côté, sensiblement un parallélogramme déformable.

## Patentansprüche

1. Heuwerbungsmaschine, insbesondere ein Pflanzenschwader, mit einem Gestell (1), das an einen Traktor gekuppelt werden kann und das mit Stützrädern (3) versehen ist, wobei das Gestell (1) einen Schwadrotor (4) stützt, der einen Ring (5) umfaßt, welcher mehrere mit Arbeitszinken (7) versehene Arme (6) trägt, wobei dieser Ring (5) durch Rollen (8) getragen wird und um eine vertikale oder leicht zur Vertikalen geneigte geometrische Achse (9) drehangetrieben werden kann, ***dadurch gekennzeichnet,*** daß das Gestell (1) aus einem im wesentlichen dreieckig ausgebildeten Rahmen (42) und einem mit Stützrädern (3) versehenen Träger (43) besteht, wobei der Träger (43) mittels einer im wesentlichen senkrecht zur Fahrtrichtung (A) verlaufenden Achse (47) an dem Rahmen (42) angelenkt ist und mittels eines Hydraulikzylinders (48) bezüglich des Rahmens (42) in der Höhe verschiebbar ist, und daß der Ring (5) auf seinem Umfang Träger (10) mit Lagern (13 und 14) aufweist, in denen sich nach außen gerichtete und um ihre jeweilige Längsachse (15) schwenkbare Zinkentragarme (6) erstrecken, wobei der Ring (5) mittels eines aus einem Riemen (17) oder einer Kette, der bzw. die sich außerhalb des Rings (5) befindet, bestehenden Steuerglieds (16) drehangetrieben wird.

2. Maschine nach Anspruch 1, ***dadurch gekennzeichnet,*** daß jede Rolle (8) an ihrem Umfang eine V-förmige Rille (44) aufweist.

3. Maschine nach Anspruch 2, ***dadurch gekennzeichnet,*** daß der Ring (5) einen quadratischen Querschnitt aufweist und mittels seiner Innenflächen (45 und 46) in den Rillen (44) der Rollen (8) geführt wird.

4. Maschine nach Anspruch 1, ***dadurch gekennzeichnet,*** daß der Hydraulikzylinder (48) an Längsträgern (50) des Trägers (43) und an einem Querträger (53) des Rahmens (42) angelenkt ist.

5. Maschine nach Anspruch 1, ***dadurch gekennzeichnet,*** daß eine Deichsel (2) mittels im wesentlichen senkrecht zur Fahrtrichtung (A) verlaufender Achsen (41) am vorderen Ende des Gestells (1) angelenkt ist.

6. Maschine nach Anspruch 5, ***dadurch gekennzeichnet,*** daß der Träger (43) des Gestells (1) einen Hebel (56) und die Deichsel (2) einen Hebel (57) aufweist, wobei eine Stange (58) mittels einer Achse (59) an dem Hebel (57) der Deichsel (2) und mittels einer zweiten Achse (60) an dem Hebel (56) des Trägers (43) angelenkt ist.

7. Maschine nach Anspruch 6, ***dadurch gekennzeichnet,*** daß die Stange (58), der Rahmen (42) des Gestells (1) und die beiden Hebel (56 und 57) von der Seite gesehen im wesentlichen ein verformbares Parallelogramm bilden.

## Claims

1. Haymaking machine, particularly a swather for plant matter, comprising a frame (1) which can be attached to a tractor and which is equipped with carrier wheels (3), which frame (1) supports a swathing rotor (4) comprising a ring (5) which carries several arms (6) equipped with working forks (7), this ring (5) being carried by rollers (8) and being able to be driven in rotation about a geometric axis (9) which is vertical or slightly inclined with respect to the vertical, ***characterized in*** that the frame (1) is made up of a framework (42) of approximately triangular shape and of a support (43) equipped with carrier wheels (3), which support (43) is articulated to the framework (42) by means of an axis (47) approximately perpendicular to the direction of travel (A) and can be moved heightwise with respect to the framework (42) with the aid of a hydraulic ram (48) and in that the ring (5) carries, on its periphery, supports (10) with bearings (13 and 14) into which outwardly-directed fork-carrying arms (6) extend, which arms can pivot about their respective longitudinal axes (15), the said ring (5) being driven in rotation by means of an operating member (16) consisting of a belt (17) or a chain which is located on the outside of the said ring (5).

2. Machine according to Claim 1, ***characterized in*** that each roller (8) has a V-shaped groove (44) on its periphery.

3. Machine according to Claim 2, ***characterized in*** that the ring (5) has a square cross-section and in that it is guided in the grooves (44) of the rollers (8) by means of its interior faces (45 and 46).

4. Machine according to Claim 1, ***characterized in*** that the hydraulic ram (48) is articulated to stringers (50) of the support (43) and to a crosspiece (53) of the framework (42).

5. Machine according to Claim 1, ***characterized in*** that a drawbar (2) is articulated to the front end of the frame (1) by means of axes (41) which are substantially perpendicular to the direction of travel (A).

6. Machine according to Claim 5, ***characterized in*** that the support (43) of the frame (1) comprises a lever (56) and in that the drawbar (2) comprises a lever (57), a rod (58) being articulated to the lever (57) of the drawbar (2) by means of an axis (59) and to the lever (56) of the support (43) by means of a second axis (6).

7. Machine according to Claim 6, ***characterized in*** that the rod (58), the framework (42) of the frame (1) and the two levers (56 and 57) form approximately, when viewed from the side, a deformable parallelogram.
